# EUROPÄISCHE PATENTSCHRIFT

(11) **EP 0 870 702 B1**
(45) Veröffentlichungstag und Bekanntmachung des Hinweises auf die Patenterteilung: **07.11.2001**
(21) Anmeldenummer: 98105985.0
(22) Anmeldetag: 01.04.1998
(51) Int. Cl.: B65G 39/02, B65G 13/06

(54) **Rollenantriebseinheit**
Roller-driving unit
Unité d'entraînement pour rouleaux

(30) Priorität: 11.04.1997 DE 19715192; 06.05.1997 DE 19719161
(43) Veröffentlichungstag der Anmeldung: 14.10.1998
(73) Patentinhaber: Telair International GmbH, 83734 Hausham (DE)
(72) Erfinder: Huber, Thomas, 82393 Iffeldorf (DE); Holzner, Richard, 84405 Dorfen (DE)
(74) Vertreter: Bohnenberger, Johannes, Dr.

(56) Entgegenhaltungen:
- DE-A- 4 102 424
- US-A- 3 698 539

## Beschreibung

Die vorliegende Erfindung betrifft eine Rollenantriebseinheit zum Antrieb von Gegenständen, insbesondere von Frachtcontainern auf einer Förderbahn nach dem Oberbegriff des Anspruches 1 und 2.

Derartige Rollenantriebseinheiten werden beispielsweise zum Transport von Frachtbehältern verwendet, die auf Rollenförderbahnen aufgesetzt sind. Solche Frachtbehälter können Frachtcontainer oder Frachtpaletten sein, wobei ein bevorzugtes Anwendungsgebiet der hier gezeigten Rollenantriebseinheit Frachtladesysteme im Luftfrachtverkehr sind, bei denen die Frachtcontainer in den Laderaum eines Flugzeuges hineingefahren und dort verstaut werden. Die Rollenantriebseinheit ist demzufolge im Flugzeug selbst installiert.

Beim Einschalten derartiger Rollenantriebseinheiten werden die dazugehörigen Rollen hochgeschwenkt, und zwar derart, daß sie sich an den Boden eines über ihnen befindlichen Frachtcontainers pressen. Durch diesen Reibschluß kann das Drehmoment der Antriebsrollen auf den Boden des Frachtcontainers übertragen werden und die Antriebsrollen befördern sie somit weiter.

Aufgrund des Einsatzgebietes tritt nun eine Vielzahl von Problemen bei der Konstruktion derartiger Rollenantriebseinheiten auf. Zum einen muß nämlich eine hinreichend hohe Anpreßkraft zwischen der Antriebsrolle und dem Boden des Containers erzeugt werden, andererseits soll die Anpreßkraft vom Drehmoment des Motors "abgezweigt" werden, so daß keine gesonderten Mittel zum Hochheben der Antriebsrolle notwendig sind. Hierbei muß die Rollenantriebseinheit kleinbauend und von geringem Gewicht sein. Da eine Vielzahl von derartigen Rollenantriebseinheiten gleichzeitig in einer Förderbahn Verwendung findet, muß die Zuverlässigkeit besonders hoch sein. Der Ausfall einer einzigen Rollenantriebseinheit kann zu einer Störung im Ladebetrieb führen.

Aus der Offenlegungsschrift DE 41 02 424 A1 ist eine solche Rollenantriebseinheit bekannt. Bei dieser Rollenantriebseinheit ist eine Antriebsrolle drehbar an einem Rahmen gelagert. Die Antriebsrolle ist über eine Getriebeanordnung mit einem Elektromotor verbunden und kann mittels dieses Elektromotors gedreht werden. Die Getriebeanordnung ist durch ein Planetengetriebe realisiert, das einen Eingang und zwei Ausgänge aufweist. Der Eingang des Planetengetriebes ist mit dem Elektromotor, der erste Ausgang mit der Antriebsrolle und der zweite Ausgang mit einer Hubeinrichtung verbunden, mit der die Antriebsrolle von einer unteren Ruhestellung in eine obere Arbeitsstellung angehoben werden kann.

Bei dieser bekannten Rollenantriebseinheit soll die Rolle nicht automatisch in die Ruhestellung absinken, wenn sie sich in ihrer angehobenen Stellung befindet und der Strom für den Elektromotor abgeschaltet wird. In der Rollenantriebseinheit ist daher eine steuerbare Blockiereinrichtung vorgesehen, die ein Absinken der Antriebsrolle aus der Arbeits- in die Ruhestellung verhindern kann. Weiterhin ist die Antriebsrolle über ein selbsthemmend ausgebildetes Getriebe mit dem ersten Ausgang des Planetengetriebes verbunden.

Diese Rollenantriebseinheit hat den Nachteil, daß die Antriebsrolle nicht mehr bewegbar ist, wenn der Elektromotor abgeschaltet ist. Somit muß zum Bewegen des Frachtcontainers von Hand die Antriebsrolle durch Lösen der Blockiereinrichtung von der oberen Arbeitsstellung in die Ruhestellung abgesenkt werden. Zum Abbremsen des Frachtcontainers kann die Antriebsrolle nun nicht mehr verwendet werden, da sie nicht mehr mit der Unterseite des zu befördernden Frachtcontainers in Kontakt ist.

Der vorliegenden Erfindung liegt die Aufgabe zugrunde, eine Rollenantriebseinheit der eingangs genannten Art zu schaffen, bei der ein manuelles Verschieben mit der Möglichkeit zum kontrollierbaren Bremsen des Transportgutes ermöglicht ist.

Diese Aufgabe wird gemäß einem ersten Lösungsvorschlag erfindungsgemäß durch den Gegenstand des Patentanspruches 1 gelöst.

Ein zweiter Lösungsvorschlag nach der Erfindung ergibt sich aus dem Patentanspruch 2.

Vorteilhafte Ausgestaltungen und Weiterbildungen der Erfindung ergeben sich aus den Unteransprüchen.

Gemäß der vorliegenden Erfindung weist die Rollenantriebseinheit eine Hauptgetriebeanordnung auf, deren Eingang mit einem Elektromotor verbunden ist. Die Hauptgetriebeanordnung weist weiterhin zwei Ausgänge auf, von denen der eine mit einer Hubeinrichtung zum Anheben einer Antriebsrolle von einer unteren Ruhestellung in eine obere Arbeitsstellung und der andere mit der Antriebsrolle verbunden ist. Die Hauptgetriebeanordnung ist erfindungsgemäß so ausgestaltet, daß die Antriebsrolle durch einen sich bewegenden Gegenstand, der durch die Rollenantriebseinheit auf einer Förderbahn angetrieben werden soll, drehbar ist. Es ist daher vorteilhafterweise möglich, den zu befördernden Gegenstand von Hand über die Antriebsrollen zu bewegen, auch dann, wenn der für den Antrieb der Rollenantriebseinheit vorgesehene Elektromotor nicht in Betrieb ist. Die Rollenantriebseinheit weist eine erste steuerbare Bremseinrichtung auf, mit der die Hubeinrichtung gesperrt werden kann. Dadurch ist es möglich, die Antriebsrolle in ihrer oberen Arbeitsstellung zu halten, so daß ein Absinken der Antriebsrolle bei abgeschaltetem Elektromotor verhindert wird.

Bei der erfindungsgemäßen Rollenantriebseinheit ist desweiteren eine zweite steuerbare Bremseinrichtung vorgesehen, die zum Bremsen des Elektromotors verwendet wird. Dadurch ist es vorteilhafterweise möglich, sich bewegende Frachtcontainer abzubremsen. Durch ein Feststellen der Antriebswelle des Elektromotors bei abgeschaltetem Elektromotor kann weiterhin gewährleistet werden, daß der Frachtcontainer auf der Förderbahn nicht verrutscht. Ein unbeabsichtigtes Weitertransportieren des Frachtcontainers, insbesondere auf einer geneigten Fläche, kann daher mittels der zweiten steuerbaren Bremseinrichtung verhindert werden. Aufgrund der Erfindung sind eine große Flexibilität der Anwendungen der Rollenantriebseinheit gegeben.

In der Ausgestaltung der Erfindung nach Anspruch 1 weist die Hubeinrichtung Rückstelleinrichtungen auf, um die Antriebsrolle von der Arbeits- in die Ruhestellung zurückzuholen. Dadurch wird gewährleistet, daß die Antriebsrolle schnell und sicher in die Ruhestellung zurückgeholt wird, wenn der Elektromotor abgeschaltet wird und die erste steuerbare Bremseinrichtung die Hubeinrichtung nicht sperrt. Die Rückstelleinrichtungen umfassen eine Rückstellfeder.

Die Hubeinrichtung umfaßt in der Ausgestaltung der Erfindung nach Anspruch 2 eine drehbar gelagerte Nockeneinrichtung zum Anheben der Antriebsrolle. Eine solche Nockeneinrichtung ist einfach herstellbar und trägt daher zu einer kostengünstigen Realisierung der Hubeinrichtung bei. Die erste steuerbare Bremseinrichtung weist dabei eine Drehbremse zum drehfesten Halten der Nockeneinrichtung auf. Eine solche Drehbremse gewährleistet einen besonders sicheren Bremsvorgang. Zwischen der ersten steuerbaren Bremseinrichtung und der Nockeneinrichtung ist weiterhin ein Getriebe vorgesehen, das die Drehgeschwindigkeit der ersten steuerbaren Bremseinrichtung gegenüber der Nockeneinrichtung erhöht. Zum Bremsen der Nockeneinrichtung ist daher ein geringes Bremsmoment notwendig.

Vorteilhafterweise sind die Hauptgetriebeanordnung und die zweite steuerbare Bremseinrichtung konzentrisch zur Drehachse des Läufers des Elektromotors angeordnet. Die Drehachse des Läufers ist wiederum senkrecht zur Drehachse der Antriebsrolle angeordnet. Dadurch läßt sich ein besonders kompakter Aufbau der Rollenantriebseinheit gewährleisten, der eine geringe Breite und Höhe aufweist.

In einer weiteren vorteilhaften Ausgestaltung der Erfindung sind der Rahmen an einem Ende um eine Schwenkachse schwenkbar gelagert und die Hubeinrichtung im wesentlichen in einer zu dieser Schwenkachse senkrechten Mittellinie des Rahmens angeordnet. Durch diese symmetrische Anordnung der Rollenantriebseinheit wird eine einfache, betriebssichere Lagerung ermöglicht, da nur ein geringes Kippmoment um die Mittellinie erzeugt wird.

Weitere vorteilhafte Ausgestaltungen der Erfindung sind den abhängigen Patentansprüchen zu entnehmen.

Im folgenden werden die Erfindung und ihre Vorteile anhand eines Ausführungsbeispiels und der Zeichnungen beschrieben. Es zeigen:
- Fig. 1: ein Ersatzschaltbild des Ausführungsbeispiels der erfindungsgemäßen Rollenantriebseinheit,
- Fig. 2: eine perspektivische Ansicht der Rollenantriebseinheit und
- Fig. 3: einen Horizontalschnitt durch die erfindungsgemäße Rollenantriebseinheit gemäß Fig. 2.

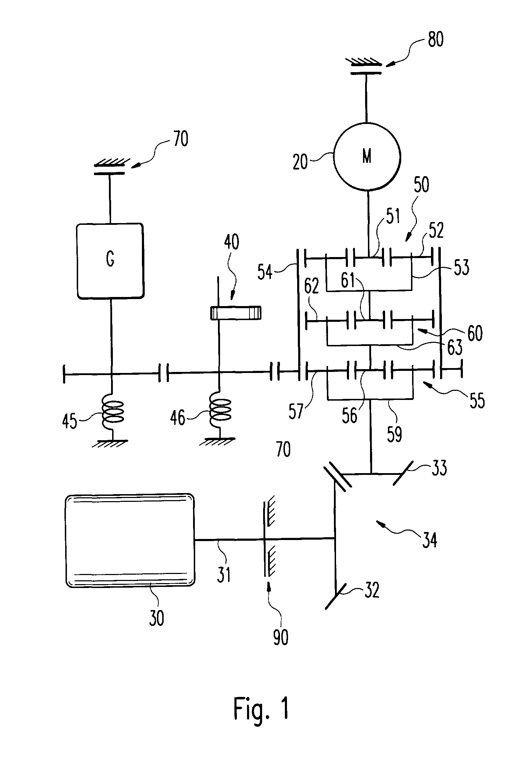

Fig. 1 zeigt ein Ersatzschaltbild eines Ausführungsbeispiels der erfindungsgemäßen Rollenantriebseinheit zur Beförderung von Gegenständen, wie z. B. Frachtcontainern, auf einer Förderbahn in einem Flugzeug.

Die Rollenantriebseinheit enthält einen Elektromotor 20, dessen Antriebswelle mit einem Eingang eines Hauptgetriebes 50 verbunden ist. Das Hauptgetriebe 50 ist hier mittels eines Planetengetriebes realisiert. Ein Sonnenrad 51 des Planetengetriebes ist an der Antriebswelle des Elektromotors 20 befestigt. Das Sonnenrad 51 kämmt mit Planetenrädern 52, die auf einem Planetenträger 53 drehbar befestigt sind und mit einem Hohlrad 54 des Hauptgetriebes 50 kämmen. Der Planetenträger 53 ist mit einem Sonnenrad 61 eines ersten Untersetzungsgetriebes 60 verbunden. Das Sonnenrad 61 kämmt mit Planetenrädern 62 des ersten Untersetzungsgetriebes 60. Die Planetenräder 62 sind drehbar auf einem Planetenträger 63 befestigt. Dieser Planetenträger 63 ist mit einem Sonnenrad 56 eines zweiten Untersetzungsgetriebes 55 verbunden. Das Sonnenrad 56 kämmt mit Planetenrädern 57 des zweiten Untersetzungsgetriebes 55, die auf einem Planetenträger 59 drehbar befestigt sind. Der Planetenträger 59 stellt einen zweiten Ausgang der aus dem Hauptgetriebe 50 und dem ersten und zweiten Untersetzungsgetriebe 60 und 55 gebildeten Getriebeanordnung dar. Die Hohlräder des ersten und zweiten Untersetzungsgetriebes 60 und 55 sind mit dem Hohlrad 54 des Hauptgetriebes 50 verbunden und stellen einen ersten Ausgang der Getriebeanordnung aus dem Hauptgetriebe 50 und dem ersten und zweiten Untersetzungsgetriebe 60 und 55 dar. Der zweite Ausgang 59 der Getriebekombination aus dem Hauptgetriebe 50 und den Untersetzungsgetrieben 60 und 55 ist mit einem zweiten Kegelrad 33 eines Kegelgetriebes 34 verbunden. Ein erstes Kegelrad 32 des Kegelgetriebes 34 ist auf einer Antriebswelle 31 einer Antriebsrolle 30 befestigt. Im vorliegenden Ausführungsbeispiel ist die Drehachse des Elektromotors 20 senkrecht zur Drehachse der Antriebsrolle 30 angeordnet. Zur Übertragung der Drehmomente zwischen Antriebsrolle 30 und Elektromotor 20 wird daher das Kegelgetriebe 34 verwendet.

Die Antriebswelle 31 der Antriebsrolle 30 wird in bekannter Weise mittels einer Bremseinrichtung 90 (leicht) gebremst, um ein Anheben aus der Ruhestellung der Antriebsrolle zu ermöglichen.

Der erste Ausgang 54 der Getriebeanordnung, der durch die miteinander verbundenen Hohlräder gebildet wird, ist mit einer Hubeinrichtung 40 verbunden. Diese Hubeinrichtung 40 umfaßt vorzugsweise eine drehbar gelagerte Nockeneinrichtung. Die Hubeinrichtung 40 dient zum Anheben der Antriebsrolle 30 von einer unteren Ruhestellung in eine obere Arbeitsstellung. Um zu gewährleisten, daß die in der oberen Arbeitsstellung befindliche Antriebsrolle 30 in die Ruhestellung zurückholbar ist, weist die Hubeinrichtung 40 Rückstelleinrichtungen in Form von tordierbaren Rückstellfedern 45 und 46 auf. Die Nockeneinrichtung 40 ist über ein Getriebe G mit einer ersten steuerbaren Bremseinrichtung 70 verbunden. Diese erste steuerbare Bremseinrichtung 70 dient zum Sperren der Hubeinrichtung 40, insbesondere dann, wenn sich die Antriebsrolle 30 in ihrer oberen Arbeitsstellung befindet. Mittels des Getriebes G ist ein Erhöhen der Drehgeschwindigkeit der ersten steuerbaren Bremseinrichtung 70 gegenüber der Nockeneinrichtung 40 möglich. Zum Sperren der Nockeneinrichtung 40 durch die erste steuerbare Bremseinrichtung 70 ist daher ein nur geringes Bremsmoment nötig.

An der Antriebswelle des Elektromotors 20 ist eine zweite steuerbare Bremseinrichtung 80 angebracht, die zum Bremsen des Elektromotors 20 verwendet wird. Mittels der zweiten steuerbaren Bremseinrichtung 80 kann die Antriebswelle des Elektromotors 20 festgestellt werden, so daß über die Getriebe 50, 55 und 60 die Antriebsrolle 30 abgebremst oder blockiert werden kann.

Wird nun der Elektromotor 20 eingeschaltet, so bremst gleichzeitig die Bremseinrichtung 90 den Planetenträger 53. Das von dem Elektromotor 20 über die Antriebsrolle übertragene Drehmoment wird auf die Planetenräder 52 des Hauptgetriebes 50 und damit auf das Hohlrad 54 und die mit diesem in Verbindung stehende Hubeinrichtung 40 übertragen. Dadurch wird bewirkt, daß die Antriebsrolle 30 aufgrund der Drehung der Nockeneinrichtung der Hubeinrichtung 40 aus ihrer Ruhestellung in ihre obere Arbeitsstellung angehoben wird. Durch das Anheben der Antriebsrolle 30 werden die Rückstellfedern 45 und 46 an der Hubeinrichtung vorgespannt. Hat die Nockeneinrichtung ihren Endanschlag erreicht, so bewirkt dies ein Festhalten des Hohlrades 54. Das Drehmoment des Elektromotors 20 wird nun über dem Planetenträger 53 auf die Antriebsrolle 30 übertragen, die dann beginnt, sich zu drehen.

Nachdem die Antriebsrolle 30 ihre obere Arbeitsstellung erreicht hat, wird die erste steuerbare Bremseinrichtung 70 betätigt, so daß die Hubeinrichtung 40 sperrt. Dadurch wird ein Absinken der Antriebsrolle 30 in ihre Ruhestellung verhindert. Kommt die hochgehobene Antriebsrolle 30 mit einem darüber befindlichen Container in Berührung, so wird dieser Container aufgrund der Drehbewegung der Antriebsrolle 30 weiterbefördert.

Bei Abschalten des Elektromotors 20 und angezogener erster Bremseinrichtung 70 wird die Antriebsrolle 30 weiterhin in ihrer oberen Arbeitsstellung gehalten. Da zwischen Elektromotor 20 und Antriebsrolle 30 keine selbsthemmenden Getriebe vorhanden sind, ist es nun möglich, den auf der Antriebsrolle 30 befindlichen Frachtcontainer weiterlaufen zu lassen oder von Hand weiterzuschieben, sofern die zweite Bremseinrichtung 80 nicht betätigt ist. Auf diese Weise ist ein leichtes Verschieben des Containers trotz der weiterhin angehobenen Antriebsrolle 30 möglich.

Um ein unabsichtliches Weiterlaufen des Frachtcontainers, insbesondere auf einer geneigten Fläche zu verhindern oder einen laufenden Frachtcontainer abzubremsen, kann die zweite Bremseinrichtung 80 angezogen werden. Die Antriebswelle des Elektromotors 20 wird dadurch festgestellt, so daß eine Drehbewegung der Antriebsrolle 30 nunmehr nicht möglich ist. Durch den Haftschluß zwischen Frachtcontainer und Antriebsrolle 30 wird der Frachtcontainer, auch bei geneigter Fläche der Förderbahn sicher gehalten. Ein unbeabsichtigtes Verrutschen ist nicht möglich.

Wird die erste Bremseinrichtung 70 gelöst und damit das Sperren der Hubeinrichtung 40 aufgehoben, so bewirken die Rückstellfedern 45 und 46 eine Rückwärtsbewegung der Nockeneinrichtung, so daß die Antriebsrolle 30 von ihrer oberen Arbeitsstellung in ihre Ruhestellung zurückgeholt wird.

Bei der erfindungsgemäßen Rollenantriebseinheit gemäß der Fig. 1 ist zwischen der ersten steuerbaren Bremseinrichtung 70 und der Nockeneinrichtung 40 das Getriebe G vorgesehen. Mittels dieses Getriebes G wird die Drehgeschwindigkeit der ersten Bremseinrichtung 70 gegenüber der Nockeneinrichtung 40 erhöht. Dadurch muß die erste steuerbare Bremseinrichtung 70 vorteilhafterweise nur ein kleines Bremsmoment erzeugen, um die Nockeneinrichtung 40 zu sperren.

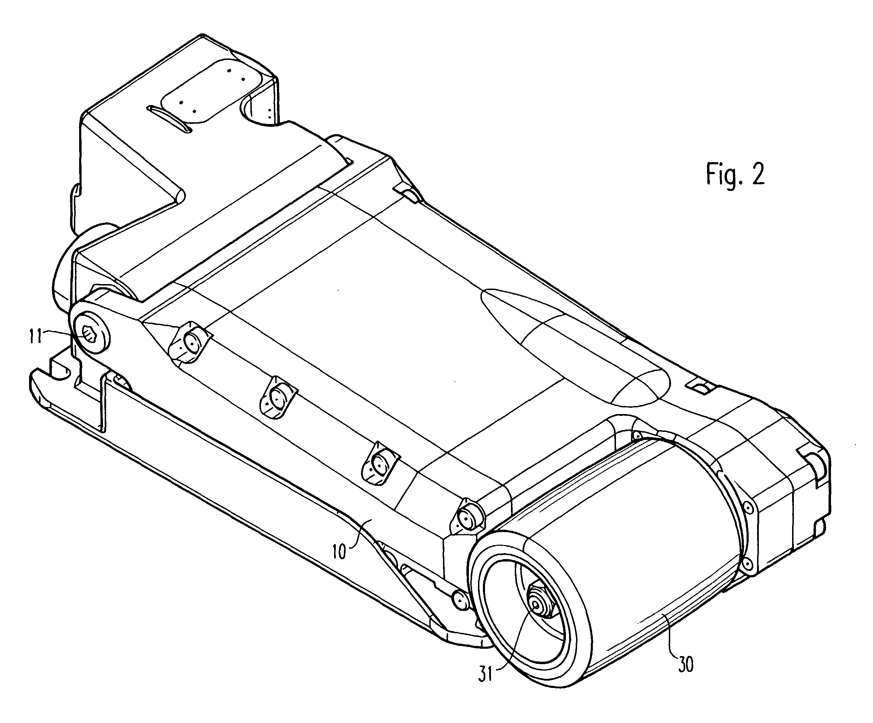

Fig. 2 zeigt eine perspektivische Ansicht der erfindungsgemäßen Rollenantriebseinheit, wie sie anhand des Ersatzschaltbildes gemäß der Fig. 1 zuvor beschrieben wurde. Die Antriebsrolle 30 ist an einem Ende eines Rahmens 10 drehbar gelagert. Die Drehachse der Antriebswelle 31 der Antriebsrolle 30 ist dabei parallel zu einer Schwenkachse 11 ausgerichtet, die sich an dem anderen Ende des Rahmens 10 befindet. Die Antriebsrolle 30 wird um diese Schwenkachse 11 geschwenkt, wenn sie sich von ihrer unteren Ruhestellung in ihre obere Arbeitsstellung bewegt und umgekehrt. Der Elektromotor, die erste Bremseinrichtung, die Hubeinrichtung, die Getriebeanordnungen, sowie die Rückstellfedern sind durch ein Metallgehäuse geschützt innerhalb des Rahmens 10 angeordnet. Aufgrund der Anordnung der Schwenkachse 11 an dem der Antriebsrolle 30 entgegengesetzten Ende des Rahmens 10 werden der Elektromotor 20 und die Getriebeanordnungen 50, 55 und 34 beim Anheben der Antriebsrolle 30 mitangehoben.

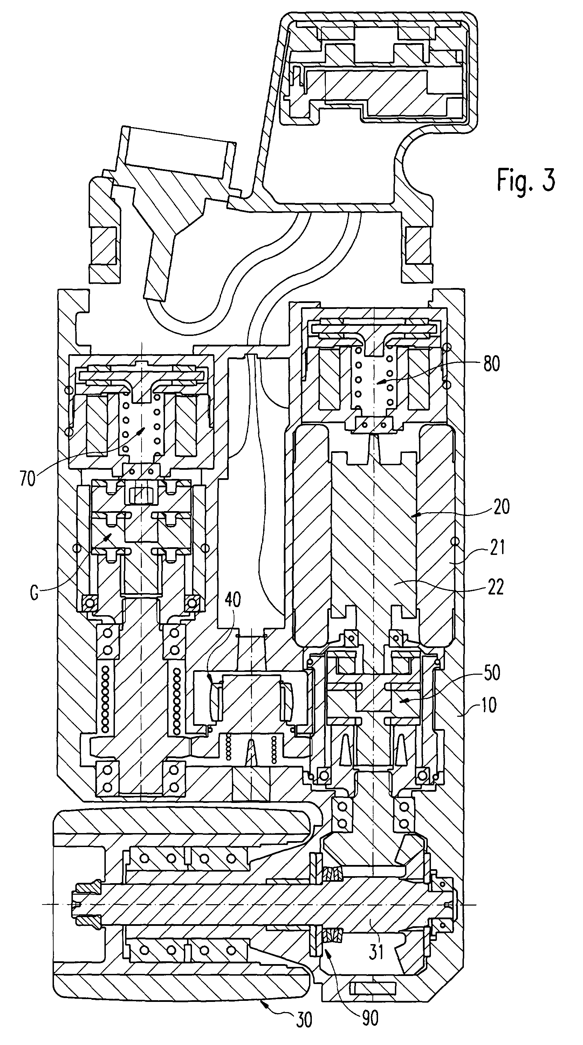

Fig. 3 zeigt einen Horizontalschnitt durch die Rollenantriebseinheit gemäß Fig. 2. Der Elektromotor 20 weist in der üblichen Weise einen Läufer 22 und einen Ständer 21 auf, der in dem Rahmen 10 fest gelagert ist. Die Drehachse des Läufers 22 ist längs der Förderrichtung der Förderbahn, und damit senkrecht zur Drehachse der Antriebsrolle 30 ausgerichtet. Das Hauptgetriebe 50 und die zweite steuerbare Bremseinrichtung 80 sind konzentrisch zur Drehachse des Läufers 22 angeordnet. Dadurch ist es vorteilhafterweise möglich, einen sehr kompakten Aufbau der erfindungsgemäßen Rollenantriebseinheit zu erreichen. Durch diesen Aufbau wird insbesondere die Breite der Rollenantriebseinheit begrenzt. Dies ist bei einer Verwendung der Rollenantriebseinheit in einem Flugzeug vorteilhaft. Fig. 3 zeigt weiterhin, daß die Drehachse der ersten steuerbaren Bremseinrichtung 70 und die - konzentrische - Drehachse des ihr zugeordneten Getriebes G parallel zur Drehachse des Läufers 22 angeordnet sind. Desweiteren ist die Drehachse der Nockeneinrichtung 40 ebenfalls parallel zur Drehachse des Läufers 22 angeordnet. Dadurch ist ebenfalls die Kompaktheit der Rollenantriebseinheit erhöht.

Bei der Rollenantriebseinheit gemäß dem vorliegenden Ausführungsbeispiel ist die Hubeinrichtung 40 vorteilhafterweise im wesentlichen in einer zu der Schwenkachse 11 senkrechten Mittellinie des Rahmens 10 angeordnet. Durch diese symmetrische Anordnung der Hubeinrichtung 40 ist eine einfache Lagerung des schwenkbaren Rahmens 10 möglich, so daß beim Anheben ein nur geringes Kippmoment erzeugt wird.

## Patentansprüche

1. Rollenantriebseinheit zum Antrieb von Gegenständen auf einer Förderbahn, umfassend
- einen Rahmen (10), an dem eine mittels eines Elektromotors (20) drehbare Antriebsrolle (30) gelagert ist;
- eine Hubeinrichtung (40) zum Anheben der Antriebsrolle (30) von einer unteren Ruhestellung in eine obere Arbeitsstellung;
- eine Hauptgetriebeanordnung (50), die
-- einen mit dem Elektromotor (20) verbundenen Eingang (51) und zwei Ausgänge (54/59) aufweist, von denen der eine (54) mit der Hubeinrichtung (40) und der andere mit der Antriebsrolle (30) verbunden ist,
**dadurch gekennzeichnet, daß**
die Hauptgetriebeanordnung (50) derart ausgebildet ist, daß die Antriebsrolle (30) durch einen sich bewegenden Gegenstand drehbar ist,
eine erste steuerbare Bremseinrichtung (70) zum Sperren der Hubeinrichtung (40), insbesondere in deren oberer Arbeitsstellung, vorgesehen ist;
eine zweite steuerbare Bremseinrichtung (80) zum Bremsen des Elektromotors (20) vorgesehen ist;
daß die Hubeinrichtung (40) Rückstelleinrichtungen (45, 46) umfaßt, um die Antriebsrolle von der Arbeits- in die Ruhestellung zurückzuholen, und
daß die Rückstelleinrichtungen (45, 46) mindestens eine Rückstellfeder umfassen.

2. Rollenantriebseinheit zum Antrieb von Gegenständen auf einer Förderbahn, umfassend
- einen Rahmen (10), an dem eine mittels eines Elektromotors (20) drehbare Antriebsrolle (30) gelagert ist;
- eine Hubeinrichtung (40) zum Anheben der Antriebsrolle (30) von einer unteren Ruhestellung in eine obere Arbeitsstellung;
- eine Hauptgetriebeanordnung (50), die
-- einen mit dem Elektromotor (20) verbundenen Eingang (51) und zwei Ausgänge (54/59) aufweist, von denen der eine (54) mit der Hubeinrichtung (40) und der andere mit der Antriebsrolle (30) verbunden ist,
**dadurch gekennzeichnet, daß**
die Hauptgetriebeanordnung (50) derart ausgebildet ist, daß die Antriebsrolle (30) durch einen sich bewegenden Gegenstand drehbar ist;
eine erste steuerbare Bremseinrichtung (70) zum Sperren der Hubeinrichtung (40), insbesondere in deren oberer Arbeitsstellung vorgesehen ist;
eine zweite steuerbare Bremseinrichtung (80) zum Bremsen des Elektromotors (20) vorgesehen ist;
daß die Hubeinrichtung (40) eine drehbar gelagerte Nockeneinrichtung umfaßt;
daß die erste steuerbare Bremseinrichtung (70) eine Drehbremse umfaßt, zum drehfesten Halten der Nockeneinrichtung; und
daß zwischen der ersten steuerbaren Bremseinrichtung (70) und der Nockeneinrichtung ein Getriebe (G) zum Erhöhen der Drehgeschwindigkeit der ersten steuerbaren Bremseinrichtung (70) gegenüber der Nockeneinrichtung vorgesehen ist.

3. Rollenantriebseinheit nach Anspruch 1 oder 2,
**dadurch gekennzeichnet, daß** der Rahmen (10) an einem Ende um eine Schwenkachse schwenkbar gelagert ist und am anderen Ende des Rahmens die Antriebsrolle (30) mit ihrer Drehachse parallel zur Schwenkachse gelagert ist.

4. Rollenantriebseinheit nach Anspruch 3,
**dadurch gekennzeichnet, daß** die Hauptgetriebeanordnung (50) sowie die zweite steuerbare Bremseinrichtung konzentrisch zur Drehachse eines Läufers (22) des Elektromotors (28) und diese senkrecht zur Drehachse der Antriebsrolle (30) angeordnet sind.

5. Rollenantriebseinheit nach Anspruch 4,
**dadurch gekennzeichnet, daß** eine Drehachse der ersten steuerbaren Bremseinrichtung (70) sowie eine Drehachse eines gegebenenfalls ihr zugeordneten Getriebes (G) parallel zu einer Drehachse einer zur Hubeinrichtung (40) gehörenden Nockeneinrichtung und zur Drehachse des Läufers (22) des Elektromotors (20) angeordnet sind.

6. Rollenantriebseinheit nach Anspruch 3,
**dadurch gekennzeichnet, daß** die Hubeinrichtung (40) im wesentlichen in einer zur Schwenkachse senkrechten Mittellinie des Rahmens (10) angeordnet ist.

## Claims

1. A roller drive unit for driving objects on a conveyor belt, comprising
- a frame (10), on which a drive roller (30) is mounted, which is rotatable by means of an electric motor (20);
- a lifting device (40) for lifting the drive roller (30) from a lower inoperative position into an upper operative position;
- a main gearing arrangement (50), which comprises an input (51) connected to the electric motor (20) and two outputs (54/59), of which one (54) is connected to the lifting device (40) and the other is connected to the drive roller (30),
**characterised in that**
the main gearing arrangement (50) is constructed in such a manner that the drive roller (30) is rotatable by a moving object;
a first controllable braking device (70) is provided for locking the lifting device (40), more particularly in its operative position;
a second controllable braking device (80) is provided for decelerating the electric motor (20);
the lifting device (40) comprises restoring devices (45, 46) for returning the drive roller from the operative position into the inoperative position; and
the restoring devices (45, 46) comprise at least one restoring spring.

2. A roller drive unit for driving objects on a conveyor belt, comprising
- a frame (10), on which a drive roller (30) is mounted, which is rotatable by means of an electric motor (20);
- a lifting device (40) for lifting the drive roller (30) from a lower inoperative position into an upper operative position;
- a main gearing arrangement (50), which comprises an input (51) connected to the electric motor (20) and two outputs (54/59), of which one (54) is connected to the lifting device (40) and the other is connected to the drive roller (30),
**characterised in that**
the main gearing arrangement (50) is constructed in such a manner that the drive roller (30) is rotatable by a moving object;
a first controllable braking device (70) is provided for locking the lifting device (40), more particularly in its upper operative position;
a second controllable braking device (80) is provided for decelerating the electric motor (20);
the lifting device (40) comprises a rotatably mounted cam device;
the first controllable braking device (70) comprises a rotary brake for securing the cam device against rotation; and
a gearing (G) is provided between the first controllable braking device (70) and the cam device for increasing the rotational speed of the first controllable braking device (70) relative to the cam device.

3. A roller drive unit according to claim 1 or 2,
**characterised in that** the frame (10) is mounted at one end so as to pivot about a pivot axis and at the other end of the frame the drive roller (30) is mounted with its axis of rotation parallel to the pivot axis.

4. A roller drive unit according to claim 3,
**characterised in that** the main gearing arrangement (50) as well as the second controllable braking device are arranged concentric to the axis of rotation of a rotor (22) of the electric motor (28) and the axis of rotation of the rotor (22) is arranged perpendicular to the axis of rotation of the drive roller (30).

5. A roller drive unit according to claim 4,
**characterised in that** an axis of rotation of the first controllable braking device (70) as well as an axis of rotation of a gearing (G) optionally associated with the first controllable braking device (70) are arranged parallel to an axis of rotation of a cam device belonging to the lifting device (40) and parallel to the axis of rotation of the rotor (22) of the electric motor (20).

6. A roller drive unit according to claim 3,
**characterised in that** the lifting device (40) is arranged substantially in a centre line of the frame (10) extending perpendicular to the pivot axis.

## Revendications

1. Unité d'entraînement à rouleaux pour entraîner des objets sur une voie de transport, comprenant
- un cadre (10) sur lequel est monté un rouleau d'entraînement (30) pouvant tourner au moyen d'un moteur électrique (20),
- un dispositif de levage (40) pour lever le rouleau d'entraînement (30) d'une position inférieure de repos à une position supérieure de travail,
- un mécanisme à engrenages principal (50), qui présente une entrée (51) reliée au moteur électrique (20) et deux sorties (54/59), dont la première (54) est reliée au dispositif de levage (40) et l'autre au rouleau d'entraînement (30),
**caractérisé en ce que** le mécanisme à engrenages principal (50) est conformé de telle manière que le rouleau d'entraînement (30) peut être tourné par un objet se déplaçant,
il est prévu un premier dispositif de freinage commandable (70) pour bloquer le dispositif de levage (40), en particulier dans sa position supérieure de travail,
il est prévu un deuxième dispositif de freinage commandable (80) pour freiner le moteur électrique (20),
**en ce que** le dispositif de levage (40) comprend des dispositifs de rappel (45, 46) afin de rappeler le rouleau d'entraînement de la position de travail à la position de repos, et
**en ce que** les dispositifs de rappel (45, 46) comprennent au moins un ressort de rappel.

2. Unité d'entraînement à rouleaux pour entraîner des objets sur une voie de transport, comprenant
- un cadre (10) sur lequel est monté un rouleau d'entraînement (30) pouvant tourner au moyen d'un moteur électrique (20),
- un dispositif de levage (40) pour lever le rouleau d'entraînement (30) d'une position inférieure de repos à une position supérieure de travail,
- un mécanisme à engrenages principal (50), qui présente une entrée (51) reliée au moteur électrique (20) et deux sorties (54/59), dont la première (54) est reliée au dispositif de levage (40) et l'autre au rouleau d'entraînement (30),
**caractérisé en ce que** le mécanisme à engrenages principal (50) est conformé de telle manière que le rouleau d'entraînement (30) peut être tourné par un objet se déplaçant,
il est prévu un premier dispositif de freinage commandable (70) pour bloquer le dispositif de levage (40), en particulier dans sa position supérieure de travail,
il est prévu un deuxième dispositif de freinage commandable (80) pour freiner le moteur électrique (20),
**en ce que** le dispositif de levage (40) comprend un dispositif à came monté rotatif,
**en ce que** le premier dispositif de freinage commandable (70) comprend un frein rotatif afin d'immobiliser en rotation le dispositif à came, et
**en ce qu'**entre le premier dispositif de freinage commandable (70) et le dispositif à came, il est prévu un mécanisme (G) pour augmenter la vitesse de rotation du premier dispositif de freinage commandable (70) par rapport au dispositif à came.

3. Unité d'entraînement à rouleaux selon la revendication 1 ou 2, **caractérisé en ce que** le cadre (10) est monté pivotant à une extrémité autour d'un axe de pivotement et, à l'autre extrémité du cadre, le rouleau d'entraînement (30) est monté avec son axe de rotation parallèle à l'axe de pivotement.

4. Unité d'entraînement à rouleaux selon la revendication 3, **caractérisé en ce que** le mécanisme à engrenages principal (50) et le deuxième dispositif de freinage commandable sont montés concentriques à l'axe de rotation d'un induit (22) du moteur électrique (28) et cet axe est perpendiculaire à l'axe de rotation du rouleau d'entraînement.

5. Unité d'entraînement à rouleaux selon la revendication 4, **caractérisé en ce qu'**un axe de rotation du premier dispositif de freinage commandable (70) et un axe de rotation d'un mécanisme (G) éventuellement associé à lui sont placés parallèles à un axe de rotation d'un dispositif à came faisant partie du dispositif de levage (40) et à l'axe de rotation de l'induit (22) du moteur électrique (20).

6. Unité d'entraînement à rouleaux selon la revendication 3, **caractérisé en ce que** le dispositif de levage (40) est placé pour l'essentiel sur une ligne médiane du cadre (10) perpendiculaire à l'axe de pivotement.
